# EUROPEAN PATENT SPECIFICATION

(11) **EP 3 837 175 B1**
(45) Date of publication and mention of the grant of the patent: **30.03.2022**
(21) Application number: 19787062.9
(22) Date of filing: 16.08.2019
(51) Int. Cl.: B65B 19/04, A24C 5/35, A24C 5/356, B65G 47/248

(54) **TRANSPORT CONVEYOR, TRANSPORT APPARATUS AND PACKING APPARATUS**
TRANSPORTFÖRDERER, TRANSPORTVORRICHTUNG UND VERPACKUNGSVORRICHTUNG
CONVOYEUR DE TRANSPORT, APPAREIL DE TRANSPORT ET APPAREIL D'EMBALLAGE

(30) Priority: 17.08.2018 PL 42668318
(43) Date of publication of application: 23.06.2021
(73) Proprietor: International Tobacco Machinery Poland Sp. z o.o., 26-600 Radom (PL)
(72) Inventor: SIKORA, Leszek, 26-600 Radom (PL); ZADECKI, Robert, 26-600 Radom (PL); FIGARSKI, Jacek, 26-600 Radom (PL); OWCZAREK, Radoslaw, 26-600 Radom (PL)
(74) Representative: Markieta, Jaroslaw Franciszek
(86) International application number: PCT/IB2019/056942
(87) International publication number: WO 2020/035824

(56) References cited:
- US-A- 2 779 453
- US-A- 5 090 553
- US-B2- 7 165 668

## Description

The object of the invention is a transport conveyor, a transport apparatus and a packing apparatus.

The invention belongs to tobacco industry solutions, in particular to the field of solutions applied in packing machines for finished tobacco products.

From the document US 2012/0090954 an apparatus for the handling of objects is known. This apparatus comprises a handling apparatus which receives objects from a feeding area and which supplies the objects by means of a transferring apparatus to at least one workstation. The handling apparatus, respectively, simultaneously receives a specific number of objects by means of an object carrier in such a way that the transferring apparatus has multiple carrying elements for multiple objects respectively held by the handling apparatus. Furthermore, the sequence of movements of each carrying element on the transferring apparatus is individually controlled so that the handling apparatus removes respectively multiple objects from the respective carrying element after passing through at least one workstation.

From the document US6325201 an apparatus for the handling of a semi-finished product comprising a storage container for receiving a pile of semi-finished products and comprising means for supporting the pile is known. The apparatus also comprises endless conveying means for receiving successive bottommost semi-finished products from the pile, the said conveying means comprising at least one empty picking-up apparatus adapted to receive and convey semi-finished products from the pile, and supporting means conveyed by the endless conveying means for at least partial supporting of the pile between the operations of lifting the said picking-up apparatus. The endless conveying means convey multiple distant lifting apparatuses among which multiple spaced carrying elements are arranged, wherein the endless conveying means comprise a rotatable member rotating around the axis which is parallel to a plane in which the bottommost semi-finished product in the pile extends, and wherein the said carrying elements comprise laterally arranged regions having front edges which are arranged in the conveying direction so as to contain different levels of parts of the bottommost zero equivalent spontaneous to the said regions.

From the document US7165668 an apparatus for transferring rod-like articles from a longitudinal conveyor is known, whereas such apparatus transfers the articles onto a transverse conveyor. Furthermore, the apparatus comprises a conveyor which receives the articles from the longitudinal conveyor and supplies the articles to the transverse conveyor, whereas the conveyor comprises at least a first conveying element and a separate second transporting element which are configured for being functionally combined with each other. Additionally, the first conveying element is structured and positioned so that it rotates the articles by a specific angle. Furthermore, the second conveying element is structured and positioned so as to reduce the transport speed of the articles.

From the document WO2003051718 a cigarette packing machine, comprising an endless drying conveyor having at least one substantially spiral part, an input station and an output station, is known. This conveyor moves endlessly along a given path in a given direction of movement in order to feed successive cigarette batches between the said input and output. The apparatus is characterised in that the said drying conveyor comprises a sequence of coils out of which the first said coil extends in the said direction of movement from the said input station and is connected, at the input station, to the last-mentioned coil running through the said output station.

From the document EP1020357 a method for forming groups of rod-like articles with a determined orientation of the rod-like articles in the group is known. The rod-like articles are supplied through multiple channels, and layers of the three-layer group of rod-like articles are placed into the pockets of an endless pocket conveyor, and the groups of rod-like articles are transferred for packaging.

Document US 2779453 shows transport and orienting means for products.

The object of the invention is a segment conveyor adapted to convey groups of rod-like articles while maintaining the mutual orientation in the group, comprising: transport segments containing a transport pocket for receiving the groups of rod-like articles and determining the mutual orientation of the rod-like articles. The transport segment are connected with one another by pivotal joints to form a chain so that an axis of the transport pocket of the transport segment is situated substantially perpendicular to a longitudinal axis of the transport segment connecting the joints of the transport segment. The conveyor according to the invention is characterised in that the transport segment is rotatably mounted, whereas the transport segment is adapted to rotate about the longitudinal axis of the transport segment connecting the joints of the transport segment.

The conveyor is characterised in that the transport pocket is situated in a body which is rotatably connected with links connecting the body with the joints of the transport segment.

The object of the invention is further a transport apparatus for transporting the groups of rod-like articles while maintaining the mutual orientation in the group of rod-like articles, comprising a feeding unit for feeding the groups of rod-like articles while maintaining the mutual orientation in the group of rod-like articles. The transport apparatus is characterised by comprising the segment conveyor according to the invention and a transferring unit adapted to transfer the groups of rod-like articles from the feeding unit to the segment conveyor while maintaining the mutual orientation in the group of rod-like articles.

The transport apparatus according to the invention is further characterised by comprising two feeding units situated on opposite sides of the segment conveyor.

The transport apparatus according to the invention is further characterised by comprising a turning unit adapted to turn the transport segment of the segment conveyor about the longitudinal axis of the transport segment connecting the joints of the transport segment.

The transport apparatus is characterised in that the turning unit is provided with three blocks, whereas at least one block is a rotatable block.

The object of the invention is further a packing apparatus adapted to insert the groups of rod-like articles while maintaining the mutual orientation in the group of rod-like articles in the packets, characterised by comprising the transport apparatus according to the invention and the transferring unit adapted to transfer the groups of rod-like articles from the segment conveyor to the packet while maintaining the mutual orientation in the group of rod-like articles.

The application of transport carriages and rotatable transport means allows increasing the flexibility of packing system designing. It is possible to design a packing system having a greater compactness and fed from multiple sources. Electromagnetically driven transport carriages as well as rotating and closing transport carriages allow conducting the transport path in a way which is unachievable for transport systems based on traditional endless chains. In addition, the application of a rotating unit allows feeding the transport apparatus from two sides.

The packing apparatus according to the invention makes it possible to check the quality of articles being packed, including the front surfaces of both ends as well as the component parts of the articles, and then to reject defective articles before feeding for packing.

Furthermore, the forming means according to the invention eliminate the need of inserting rod-like articles of the tobacco industry into conventional pockets of endless conveyors used in conventional packing machines, which results in a reduction of the number of damaged articles in packets and a reduction of the number of rejected packets with tobacco products. The application of the forming means according to the invention allowed eliminating a container with multiple channels through which the cigarettes on conventional packing machines were fed.

The object of the invention was discussed in detail on the basis of an embodiment illustrated in a drawing in which:
- Fig. 1a: shows a packing machine in a perspective view,
- Fig. 1b: shows another packing machine in a perspective view,
- Fig. 2a: shows a forming apparatus in a perspective view,
- Fig. 2b: shows another forming apparatus in a perspective view,
- Fig. 3a: shows the forming apparatus of Fig. 2a in an open configuration,
- Fig. 3b: shows the forming apparatus of Fig. 2b in an open configuration,
- Fig. 4a: shows a cross-section of the first embodiment of the forming apparatus in an open configuration,
- Fig. 4b: shows a cross-section of the first embodiment of the forming apparatus in a closed configuration,
- Fig. 5a: shows a cross-section of the second embodiment of the forming apparatus in an open configuration,
- Fig. 5b: shows a cross-section of the second embodiment of the forming apparatus in a closed configuration,
- Fig. 6a: shows diagrammatically, in a perspective view, a link of a segment conveyor in the first embodiment,
- Fig. 6b: shows diagrammatically, in a perspective view, a link of a segment conveyor in the second embodiment,
- Fig. 7: shows a transferring unit,
- Fig. 8: shows diagrammatically, in a cross-section, the transferring unit in a configuration for the transfer of rod-like articles,
- Fig. 9: shows a view of the transferring unit in a situation where a group of articles with a detected defective article is replaced by another group of rod-like articles transported by a successive forming unit,
- Fig. 10: shows a rotating station while changing the segment orientation,
- Fig. 11: shows a packing station.

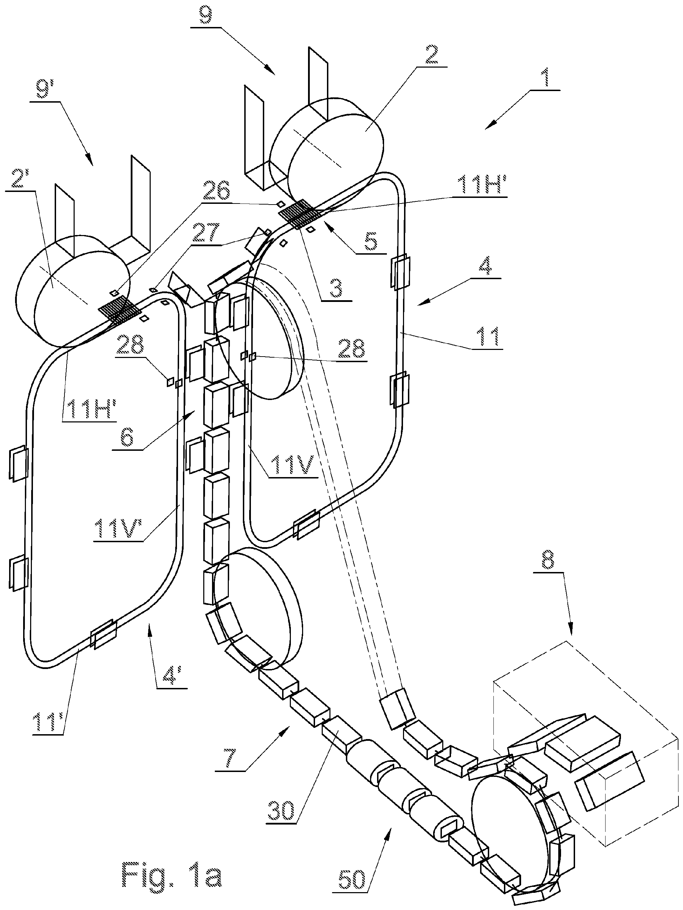

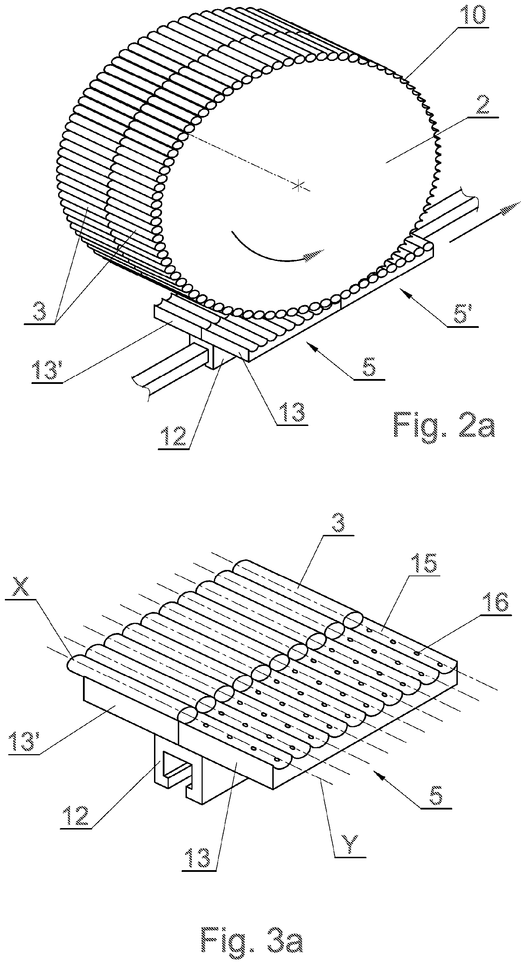

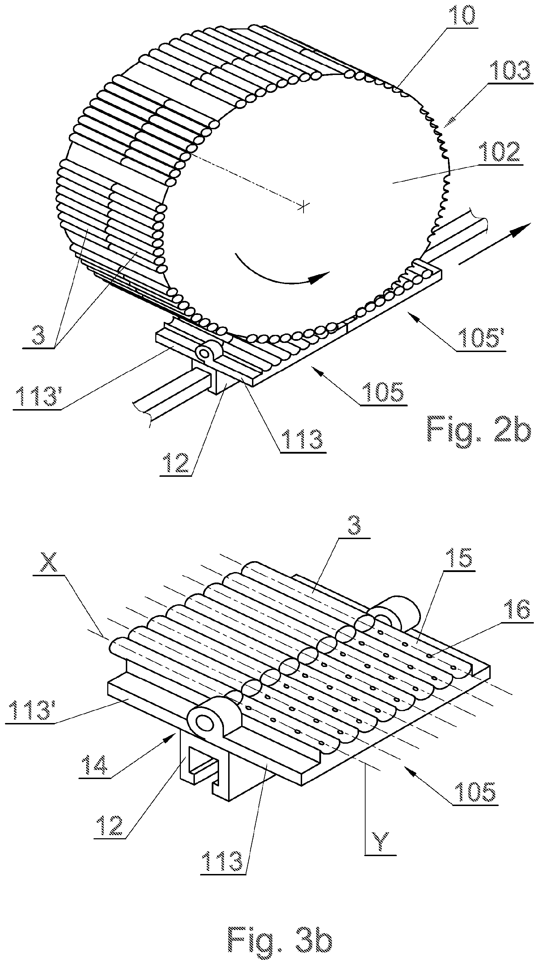

Fig. 1a shows a packing apparatus 1 comprising two drum conveyors 2, 2' for feeding rod-like articles 3, two feeding units 4, 4' provided with forming apparatuses 5, for forming and transporting groups G of the rod-like articles 3, a transferring unit 6, a segment conveyor 7 for transporting the group G of the rod-like articles 3, and a packing module 8. The drum conveyor 2, 2' is fed from the container 9, 9', whereas the feeding from the drum conveyor 2, 2' in another way, for example from another drum conveyor, is also possible. On the drum conveyor 2, 2', the rod-like articles 3 are transported in grooves 10 from which the rod-like articles 3 are transferred to the forming apparatus 5 (Fig. 2a). The arrows show the direction of rotation of the drum conveyor 2 and the direction of movement of the forming apparatus 5. The forming apparatus 5 belongs to the feeding unit 4, 4', whereas the feeding unit 4, 4' may be provided with multiple forming apparatuses 5 moving along a guide 11, 11' independently of one another. The feeding unit 4, 4' is situated in a vertical plane, whereas the guide 11, 11' in the feeding unit 4, 4' for conveying the rod-like articles 3 has a horizontal section 11H, 11H' and a vertical section 11V, 11V'. The transferring of the rod-like articles 3 from the drum conveyor 2, 2' to the forming apparatus 5 takes place in the horizontal section 11H, 11H'. The forming apparatus 5 is provided with a carriage 12, whereas on the transport carriage 12 there are two transport sections 13, 13', and the transport sections 13, 13' are fastened to a mechanism 14 which is adapted to change the mutual position of the transport sections 13, 13'. In Fig. 2a, the transport sections 13, 13' are situated so that the grooves 15 are in one plane. As shown in Fig. 3a, the transport section 13, 13' has the form of a plate provided with multiple grooves 15, whereas the groove 15 has a diameter adapted to the diameter of the rod-like article 3, and the axis X of the rod-like article 3 substantially overlaps the axis Y of the groove 15, whereas the axes Y of the grooves 15 are situated in one plane k. In addition, the groove 15 is provided with openings 16 supplying the vacuum necessary to hold the rod-like article 3 in the groove 15. Fig. 3a shows the unfilled transport section 13, whereas the transport section 13' has all grooves filled with the rod-like articles 3. The drum conveyor 2 is provided with the grooves 10 on the entire circumference, whereas Fig. 2b shows an embodiment of the drum conveyor 102 which is provided with the grooves 10 grouped into sections 103. The drum conveyor 102 is adapted to transfer the rod-like articles 3 into the grooves 15 of the transport sections 113, 113' shown in Fig. 3b. The grooves 15 are arranged so that the sections 113, 113' of the successive forming apparatuses 105, 105' receive the rod-like articles 3 from the successive sections 103 of the drum conveyor 102. The sections 113, 113' are connected with one another by means of a mechanism 14 which is shown in simplified terms. The carriage 12 is also showed in simplified terms.

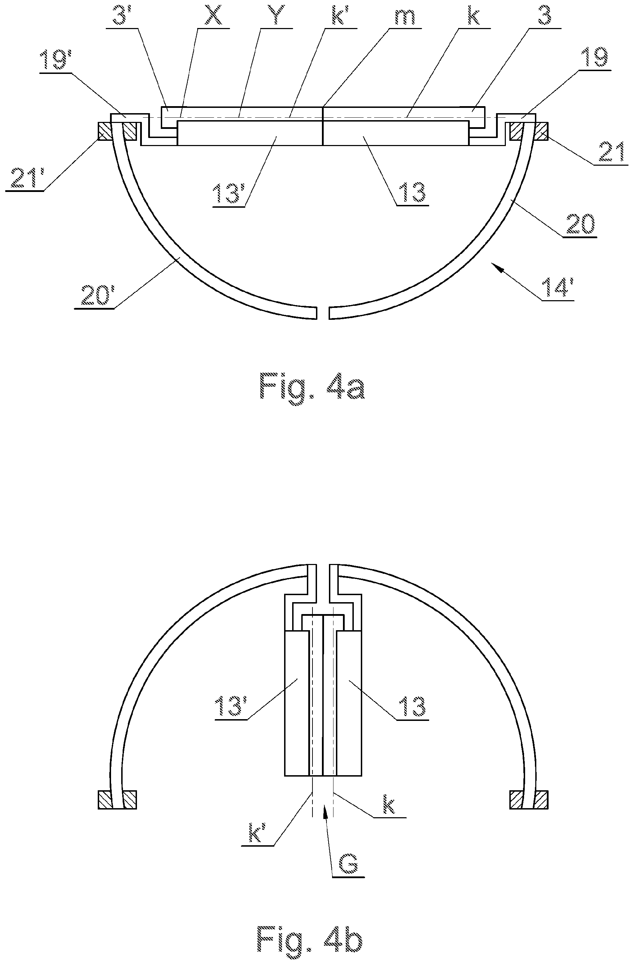

The transport sections 13, 13' of the forming apparatuses 5, 5' are adapted to change the configuration of their mutual position. In the open configuration, the movable transport sections 13, 13' are situated next to each other (Fig. 4a) in such a way that the planes k, k' of both transport sections 13, 13' overlap. In the closed configuration, the planes k, k' of both transport sections 13, 13' are situated parallel to each other at a distance equal to about one diameter of the rod-like article 3, the transport sections 13, 13' are situated in a position which may be described as a mirror-image position (Fig. 4b). A change of configuration of the transport sections 13 from the open configuration to the closed configuration takes place at the time of movement along the guide 11 at the sections 11H, 11H', 11V, 11V' between the drum conveyor 2, 2' and the transferring unit 6. The change of configuration may take place by means of cams or by means of actuator-type elements which will enforce a change of position of the transport sections 13. The change of configuration may be done in any other way. Figs. 4a and 4b show an embodiment of the mechanism 14' for changing the position of the transport sections 13, 13'. Fig. 4a shows the transport sections 13, 13' before a rotation in the open configuration where the grooves 15 of the transport section 13 are situated in the plane k overlapping the plane k' of the grooves 15 of the transport section 13', whereas Fig. 4b shows the transport sections 13, 13' in the closed configuration after a rotation around the axis m where the grooves 15 of both transport sections 13, 13' are situated in two planes k, k' which are parallel to each other. The axis m is parallel to the direction of movement of the transport carriage 12 or corresponds to the direction of movement of such carriage. The transport section 13, 13' is attached to a bracket 19, 19' which is connected with an arched guiding element 20, 20'. The arched guiding element 20, 20' is slidably mounted in a guide 21, 21' in such a way that during the change of configuration the rod-like articles 3, 3' rotate around the axis m. After the change of configuration of the transport sections 13, 13', the planes k, k' are situated parallel to each other and are at a distance of about one diameter of the rod-like article 3, in other words, the grooves 15 and the rod-like article 3 layers are situated in two planes which are parallel to each other, whereas in the closed configuration a group G of the rod-like articles 3 is formed wherein the mutual position of the rod-like articles 3 is such as needed to place the group G into the pocket of the segment conveyor 7.

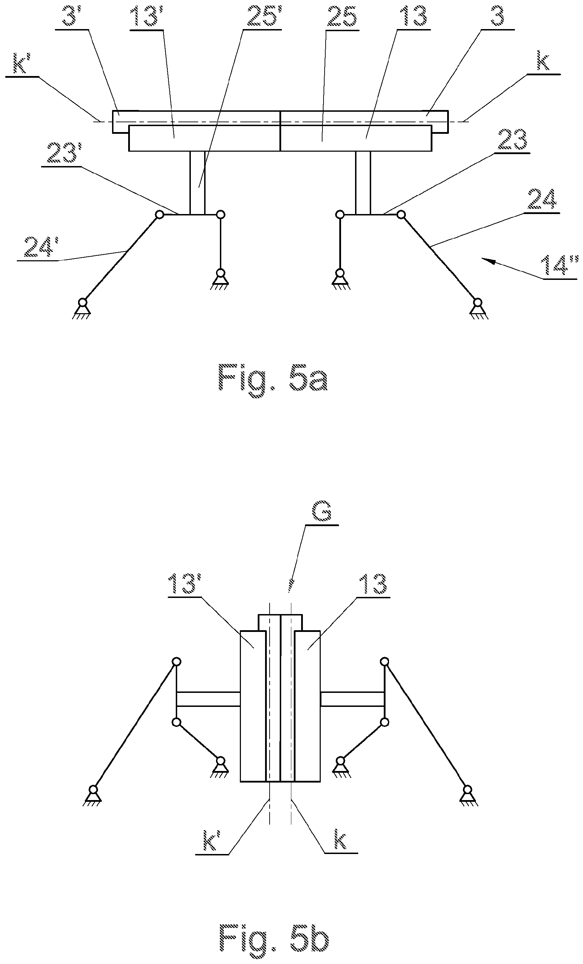

Figs. 5a and 5b show another embodiment of the mechanism 14" for changing the position of the transport sections 13, 13'. The transport section 13, 13' is attached to a bracket 25, 25' connected with a link 23 23' of a four-bar linkage, whereas the link 23, 23' is connected by joints with the links 22, 22' and 24, 24'. In Fig. 5a, the transport sections 13, 13' are in the open configuration, after a clockwise rotation of the link 22, and an anticlockwise rotation of the link 22', the transport sections will change their positions and will be in the closed configuration shown in Fig. 5b where the grooves 15 and the rod-like article 3 layers of the formed group G are situated in two planes which are parallel to each other. The movement of the transport sections 13, 13' may be composed of rotations around axes which are parallel to each other and parallel to the direction of movement of the transport carriage 12 or corresponding to such direction.

The carriages 12 of the forming apparatus 4, 4' are driven by means of an electric or magnetic drive mechanism which enables the carriages 12 to move independently of one another with different speeds. Due to the fact that the carriages move independently of one another, it is possible to situate the carriages 12 as shown in Fig. 2a so that the transport sections 13, 13' of two carriages 12 and 12' are adjacent to each other so that it is possible to transfer the rod-like articles 3 from the drum conveyor 2 to the grooves 15 continuously, i.e. without stopping the drum conveyor 2, 2'. The forming apparatus 5' may start the movement after filling the transport sections of such apparatus still in the course of filling of the transport sections 13, 13' of the forming apparatus 5. The transferring of the rod-like articles 3 from the drum conveyor 102 to the grooves 15 of the forming apparatuses 105, 105' (Fig. 2b) may also take place continuously, i.e. without stopping the drum conveyor 102.

The feeding unit 4, 4' is provided with sensors 26 designed to check the ends of the rod-like articles 3 which may be accessed after placing the rod-like articles 3 onto the transport sections 13, 13' and with sensors 27 designed to X-ray the rod-like articles 3. In addition, the feeding unit 4, 4' is provided with sensors 28 designed to check such ends of the rod-like articles 3 which may be accessed after assembling the transport sections 13, 13'. The groups G in which defective rod-like articles 3 have been detected may be rejected in a further part of their path of movement.

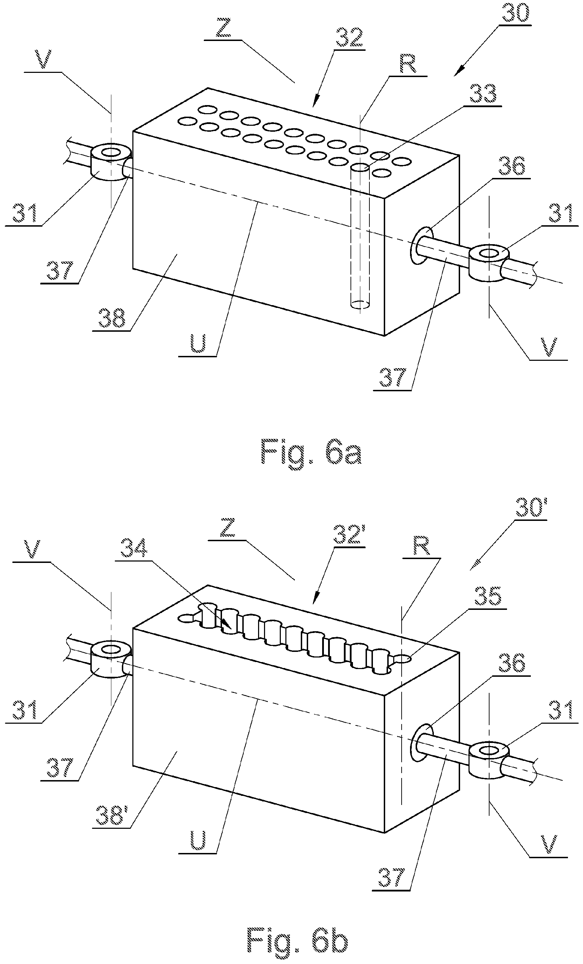

The segment conveyor 7 consists of multiple transport segments 30, whereas the transport segments 30 are connected by joints 31 having axes V, such as chain links (Fig. 6a). The transport segment 30 has a longitudinal axis U which connects the joints 31 of the transport segment 30, i.e. the longitudinal axis U passes through the axes V of the joints 31. The transport segment 30 is provided with a transport pocket 32 in the body 38 adapted to receive the groups G of rod-like articles 3. Fig. 6a shows an embodiment of the transport segment 30 wherein the transport pocket 32 has multiple openings 33 for the rod-like articles 3. The transport pocket 32 is situated in the segment 30 so that the axis Z, centrally situated in the pocket 32 and parallel to the axis R of the openings 33, is perpendicular to the longitudinal axis U. The rod-like articles 3 situated in the transport pocket 32 determine the mutual orientation of the rod-like articles 3 during the transport of the rod-like articles 3 to the packing module 8. Fig. 6b shows an embodiment of the transport segment 30' wherein the transport pocket 32' is made in the body 38' as one opening 34 having multiple grooves 35 for the rod-like articles. The axis Z, centrally situated in the transport pocket 32' and parallel to the axis R of the grooves 35, is perpendicular to the longitudinal, axis U of the transport segment 30'. The transport pocket 32, 32' together with the body 38, 38' is mounted rotatably around the longitudinal axis U. On both sides of the pocket 32, 32', there are situated bearings 36 so that the transport pocket 32 may rotate relative to connectors 37, thus also relative to the joints 31 and the adjacent transport segments.

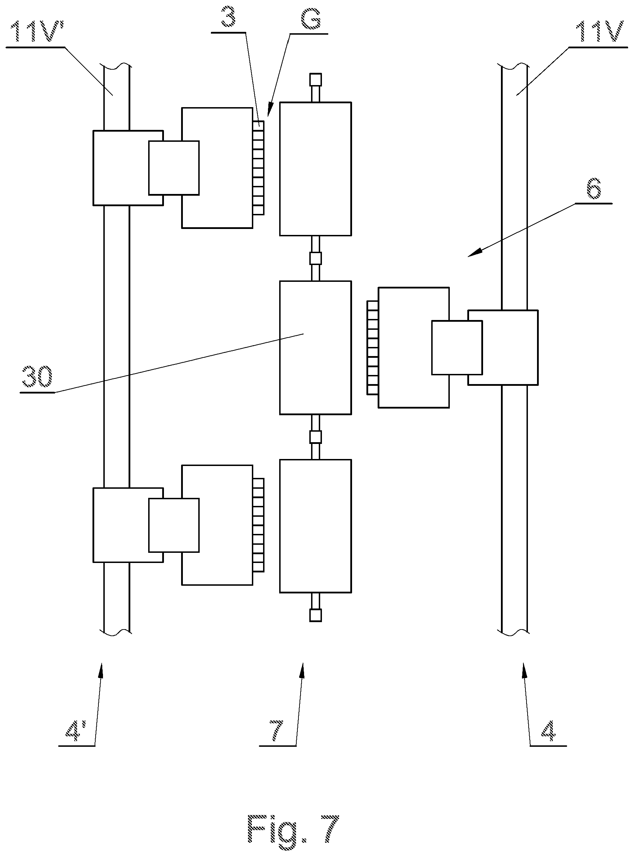

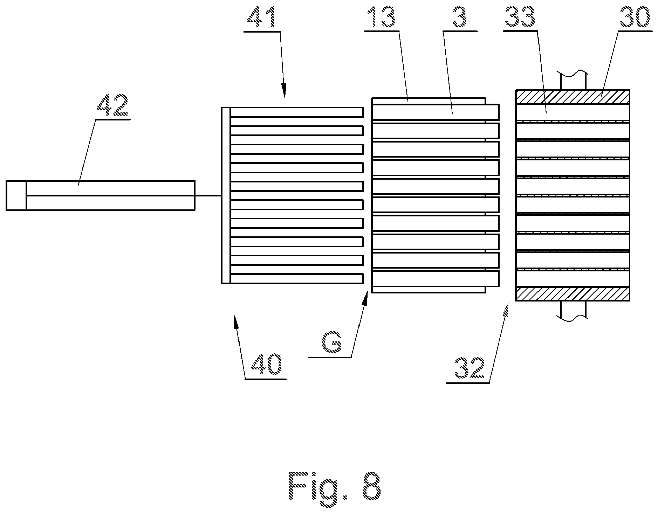

Fig. 7 shows a transferring unit 6 for transferring the groups G of the rod-like articles 3 from the feeding unit 4, 4' to the segment conveyor 7, whereas the transferring unit 6 is situated between vertical sections 11V, 11V' of a guide 11, 11' of the feeding unit 4, 4'. Fig. 7 shows two forming apparatuses 4, 4', whereas it is possible to transfer the groups G to the segment conveyor 7 from one forming apparatus 4. In the embodiment of the transferring unit 6 shown, three transferring apparatuses are to be used. In Fig. 8, the transport pocket 32 of the transport segment 30 is shown in cross-section, in addition, the transport section 13 of the forming apparatus 4, 4' and the transferring apparatus 40 are shown. The transferring apparatus 40 comprises a pusher 41 moved by means of an actuator 42 or another drive element with a linear movement. In the transferring unit 6, the rod-like articles 3 which are situated in the grooves 15 of the respective transport sections 13 will be inserted into the openings 33 of the respective transport pockets 32.

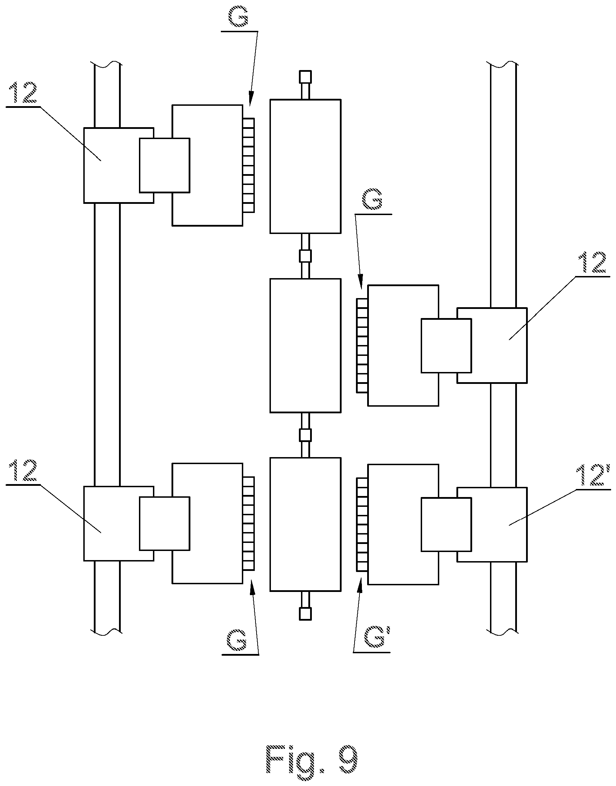

If defective rod-like articles 3 on the transport sections 13, 13' are detected, it is possible to replace the group G carried on one carriage 12 with the group G carried on the next carriage 12. It is possible due to the fact that the carriages 12 move independently of one another. Fig. 9 shows a situation where the carriages 12 carry the groups G containing only good rod-like articles 3, and the carriage 12' carries the group G' containing defective rod-like articles 3. The rod-like articles 3 from the carriages 12 will be placed into the pockets 32 of the transport segments 30, and the rod-like articles 3 from the carriage 12' will be further conveyed downwards and rejected, for example gravitationally at the lower section of the guide 11 by shutting off the vacuum or after stopping by means of a pusher.

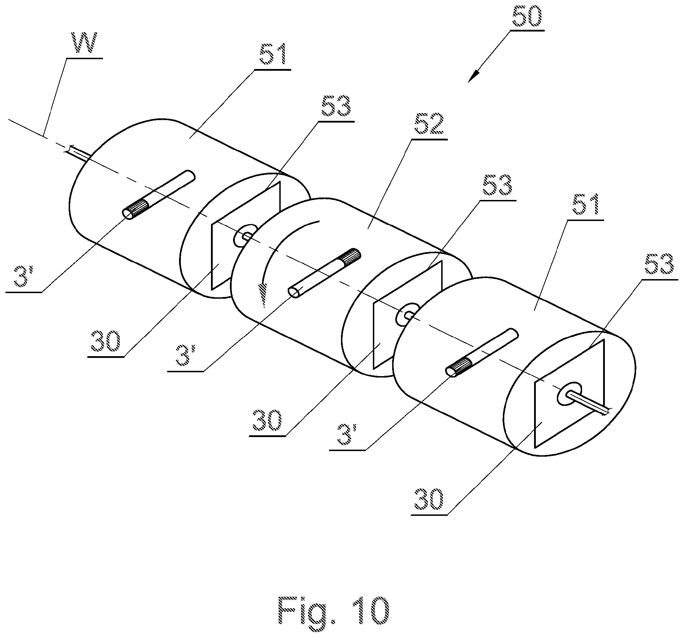

If the feeding apparatuses 4, 4' feed cigarettes with a filter, the adjacent pockets will be filled with cigarettes whose filters will be oriented in opposite directions. However, in the packing module 8 all cigarettes must be oriented in the same direction. The segment conveyor 7 passes through the turning unit 50 whose task is to turn the transport segments 30, 30' so that the rod-like articles 3 collected in the transport pockets 32, 32' have the same orientation. The turning unit 50 is provided with two stationary blocks 51 and a rotatable block 52 situated between the stationary blocks 51 as shown in Fig. 10. Fig. 10 shows the cigarettes 3' representing the orientation of all cigarettes in the respective transport segments 30, 30'. Both the stationary block 51 and the rotatable block 52 are provided with a through channel 53 whose cross-section is adapted to the cross-section of the transport segment 30, 30'. After stopping the segment conveyor 7 in the position shown in Fig. 10, the rotatable block 52 rotates by 180° around the axis W overlapping the axes U of the respective transport segments 30, 30'. After passing through the turning unit 50 in all transport segments 30, 30', the rod-like articles 3 in the transport pockets 32, 32 have the same orientation. An embodiment wherein the central block will be stationary and the outer blocks will be rotatable is also possible.

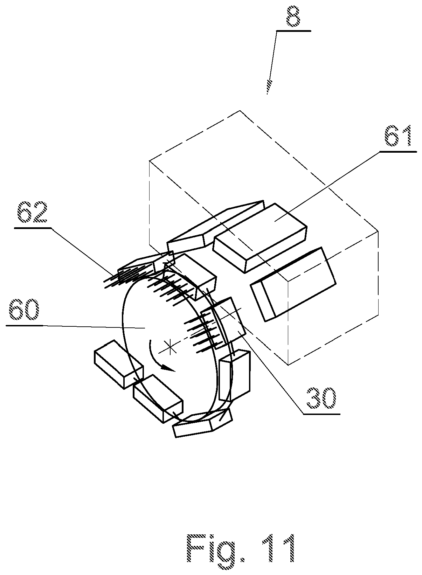

The transport segments 30, 30' of the segment conveyor 7 move further to the packing module 8. The transport segments 30, 30' are placed onto a transport wheel 60 (Fig. 11). The transport wheel 60 makes a rotational movement by leaps. The transport wheel 60 stops when three filled transport segments 30, 30' are situated directly opposite the packing channels 61. The pushers 62 push the groups G of the rod-like articles 3 from the transport pockets 30, 30' to the packing channels 61. After pushing the rod-like articles 3, the transport wheel 60 makes a rotation by a certain angle so that three successive filled transport segments 30, 30' will be situated directly opposite the packing channels 61. The pushers 62 together with the not shown guides and the drive unit constitute the transferring unit 63 in the packing module 8.

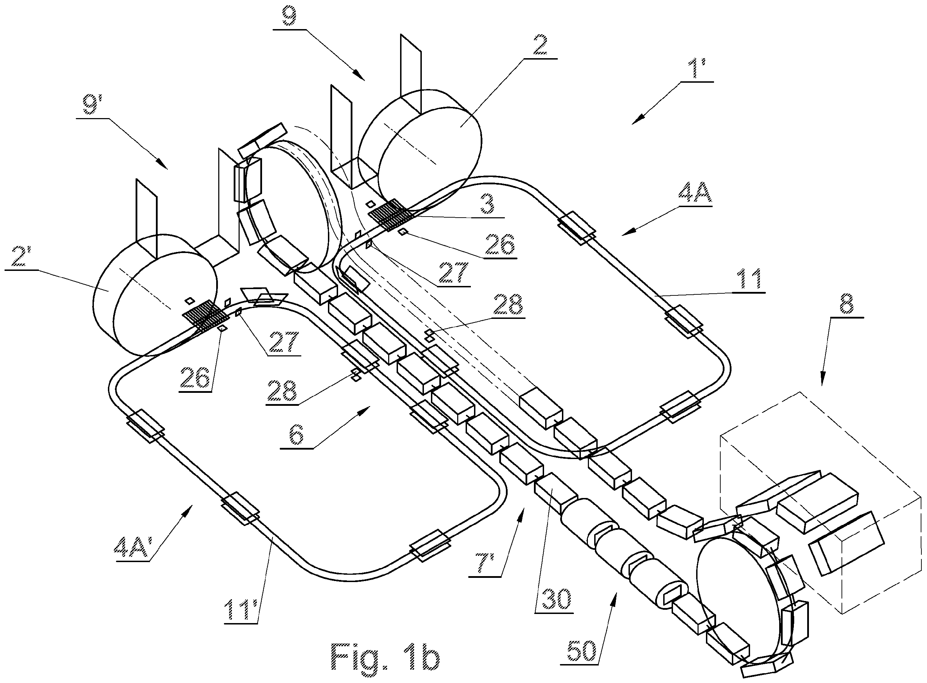

Fig. 1b shows an embodiment of the packing apparatus 1' which comprises two drum conveyors 2, 2' for feeding the rod-like articles 3, two feeding units 4A, 4A' provided with forming apparatuses 5 for forming and transporting the groups G of the rod-like articles 3, a transferring unit 6, a segment conveyor 7' for conveying the group G of the rod-like articles 3 and a packing module 8. The packing apparatus 1' has a similar structure as the packing apparatus 1 shown in Fig. 1a, the difference consists in that the feeding units 4A, 4A' are situated horizontally. In connection with the horizontal situation of the feeding units 4A, 4A', the path of movement of the segment conveyor is changed 7'. The functions of respective units of the packing apparatus 1' are unchanged in comparison to the first embodiment.

## Claims

1. A segment conveyor (7, 7') adapted to convey groups (G) of rod-like articles (3) while maintaining mutual orientation in the group (G), comprising:
transport segments (30, 30') containing a transport pocket (32, 32') for receiving groups (G) of rod-like articles (3) and determining the mutual orientation of the rod-like articles (3), whereas
the transport segments (30, 30') are connected with one another by pivotal joints to form a chain so that an axis (Z) of the transport pocket (32, 32') of the transport segment (30, 30') is situated substantially perpendicular to a longitudinal axis (U) of the transport segment (30, 30') connecting the joints (31) of the transport segment (30, 30'),
**characterised in that**
the transport segment (30, 30') is rotatably mounted, whereas the transport segment (30, 30') is adapted to rotate about the longitudinal axis (U) of the transport segment (30, 30') connecting the joints (31) of the transport segment (30, 30').

2. The conveyor as in claim 1, **characterised in that** the transport pocket (32, 32') is situated in a body (38, 38') which is rotatably connected with links (37) connecting the body (38, 38') with the joints (31) of the transport segment (30,30').

3. A transport apparatus for transporting groups (G) of rod-like articles (3) while maintaining mutual orientation in the group (G) of rod-like articles (3), comprising
a feeding unit (4, 4'; 4A, 4A') for feeding the groups (G) of rod-like articles (3) while maintaining the mutual orientation in the group (G) of rod-like articles (3),
**characterised by** further comprising
the segment conveyor (7, 7') as in claim 1 or 2, and
a transferring unit (6) adapted to transfer the groups (G) of rod-like articles (3) from the feeding unit (4, 4'; 4A, 4A') to the segment conveyor (7, 7') while maintaining the mutual orientation in the group (G) of rod-like articles (3).

4. The transport apparatus as in claim 3, **characterised by** comprising
two feeding units (4, 4'; 4A, 4A') situated on opposite sides of the segment conveyor (7, 7').

5. The transport apparatus as in claim 3 or 4 **characterised by** further comprising
a turning unit (50) adapted to turn the transport segment (30, 30') of the segment conveyor (7, 7') about the longitudinal axis (U) of the transport segment (30, 30') connecting the joints (31) of the transport segment (30, 30').

6. The transport apparatus as in claim 5, **characterised in that** the turning unit (50) is provided with three blocks (51, 52), whereas at least one block (51, 52) is a rotatable block.

7. A packing apparatus adapted to insert groups of rod-like articles while maintaining mutual orientation in the group (G) of rod-like articles (3) in packets, **characterised by** comprising
the transport apparatus as in claim 3 to 6, and
the transferring unit (63) adapted to transfer the groups (G) of rod-like articles (3) from the segment conveyor (7, 7') to the packet while maintaining the mutual orientation in the group (G) of rod-like articles (3).

## Patentansprüche

1. Ein Segmentförderer (7, 7') ist so angepasst, dass er Gruppen (G) von stabförmigen Gegenständen (3) befördert, während er die gegenseitige Ausrichtung in der Gruppe (G) beibehält, umfassend:
Transportsegmente (30, 30'), die eine Transporttasche (32, 32') enthalten, zum Aufnehmen von Gruppen (G) von stabförmigen Gegenständen (3) und zum Bestimmen der gegenseitigen Orientierung der stabförmigen Gegenstände (3), wobei
die Transportsegmente (30, 30') miteinander verbunden durch Drehgelenke zur Bildung einer Kette sind, so dass eine Achse (Z) der Transporttasche (32, 32') des Transportsegments (30, 30') im Wesentlichen senkrecht zu einer Längsachse (U) des Transportsegments (30, 30') angeordnet ist, das die Gelenke (31) des Transportsegments (30, 30') verbindet,
**ist dadurch gekennzeichnet, dass**
das Transportsegment (30, 30') drehbar gelagert ist, wobei das Transportsegment (30, 30') um die Längsachse (U) des Transportsegments (30, 30') drehbar ist und die Gelenke (31) des Transportsegments (30, 30') verbindet.

2. Der Förderer nach Anspruch 1 ist **dadurch gekennzeichnet, dass** die Transporttasche (32, 32') in einem Körper (38, 38') angeordnet ist, der drehbar mit Gliedern (37) verbunden ist, die den Körper (38, 38') mit dem Gelenk (31) des Transportsegments (30, 30') verbindet.

3. Die Transportvorrichtung zum Transportieren von Gruppen (G) von stabförmigen Gegenständen (3) unter Beibehaltung der gegenseitigen Orientierung in der Gruppe (G) von stabförmigen Gegenständen (3), umfassend
eine Zuführeinheit (4, 4'; 4A, 4A') zum Zuführen der Gruppen (G) von stabförmigen Gegenständen (3) unter Beibehaltung der gegenseitigen Orientierung in der Gruppe (G) von stabförmigen Gegenständen (3),
**ist dadurch gekennzeichnet, dass** er ferner
den Segmentförderer (7, 7') nach Anspruch 1 oder 2 umfasst, und
eine Überführungseinheit (6), die so angepasst ist, dass sie die Gruppen (G) von stabförmigen Gegenständen (3) von der Zuführeinheit (4, 4'; 4A, 4A') zu dem Segmentförderer (7, 7') unter Beibehaltung die gegenseitige Orientierung in der Gruppe (G) von stabförmigen Gegenständen (3) überführt.

4. Die Transportvorrichtung nach Anspruch 3 ist **dadurch gekennzeichnet, dass** sie zwei Zuführeinheiten (4, 4'; 4A, 4A') umfasst, die auf gegenüberliegenden Seiten des Segmentförderers (7) angeordnet sind.

5. Die Transportvorrichtung nach Anspruch 3 oder 4 ist **dadurch gekennzeichnet, dass** sie ferner eine Dreheinheit (50) umfasst, die angepasst ist, um das Transportsegment (30, 30') des Segmentförderers (7, 7') um die Längsachse (U) Transportsegment (30, 30'), das die Gelenke (31) des Transportsegments (30, 30') zu verbindet.

6. Die Transportvorrichtung nach Anspruch 5 ist **dadurch gekennzeichnet, dass** die Dreheinheit (50) mit drei Blöcken (51, 52) versehen ist, wobei mindestens ein Block (51, 52) ein drehbarer Block ist.

7. Die Verpackungsvorrichtung, die geeignet ist, Gruppen von stabförmigen Gegenständen einzuführen, während die gegenseitige Orientierung in der Gruppe (G) von stangenförmigen Gegenständen (3) in Paketen beibehalten **wird, ist dadurch gekennzeichnet,**
**dass** sie die Transportvorrichtung nach Anspruch 3 bis 6 und
die Übertragungseinheit (63) umfasst, die dafür ausgelegt ist, die Gruppen (G) von stabförmigen Gegenständen (3) von dem Segmentförderer (7, 7') zu dem Paket zu überführen, während die gegenseitige Ausrichtung in der Gruppe (G) von stabförmigen Gegenständen (3) beibehalten wird.

## Revendications

1. Convoyeur de segments (7, 7') adapté pour transporter des groupes (G) d'articles en forme de tige (3) tout en maintenant une orientation mutuelle dans le groupe (G), comprenant :
segments de transport (30, 30') contenant une poche de transport (32, 32') pour recevoir des groupes (G) d'articles en forme de tige (3) et déterminer l'orientation mutuelle des articles en forme de tige (3), tandis que
les segments de transport (30, 30') sont reliés entre eux par des articulations pivotantes pour former une chaîne, de sorte qu'un axe (Z) de la poche de transport (32, 32') du segment de transport (30, 30') est situé sensiblement perpendiculairement à un axe longitudinal (U) du segment de transport (30, 30') reliant les articulations (31) du segment de transport (30, 30'),
**caractérisé en ce que**
le segment de transport (30, 30') est monté de manière rotative, tandis que le segment de transport (30, 30') est adapté pour tourner autour de l'axe longitudinal (U) du segment de transport (30, 30') reliant les articulations (31) du segment de transport (30, 30').

2. Convoyeur selon la revendication 1, **caractérisé en ce que** la poche de transport (32, 32') est située dans un corps (38, 38') qui est relié de manière rotative à des liaisons (37) reliant le corps (38, 38') aux articulations (31) du segment de transport (30, 30').

3. Appareil de transport pour transporter des groupes (G) d'articles en forme de tige (3) tout en maintenant une orientation mutuelle dans le groupe (G) d'articles en forme de tige (3), comprenant
une unité d'alimentation (4, 4' ; 4A, 4A') pour alimenter les groupes (G) d'articles en forme de tige (3) tout en maintenant l'orientation mutuelle dans le groupe (G) d'articles en forme de tige (3),
**caractérisé en ce qu'**il comprend en outre
le convoyeur de segments (7, 7') tel que dans la revendication 1 ou 2, et
une unité de transfert (6) adaptée pour transférer les groupes (G) d'articles en forme de tige (3) de l'unité d'alimentation (4, 4' ; 4A, 4A') au convoyeur de segments (7, 7') tout en maintenant l'orientation mutuelle dans le groupe (G) d'articles en forme de tige (3).

4. Appareil de transport selon la revendication 3, **caractérisé en ce qu'**il comprend deux unités d'alimentation (4, 4' ; 4A, 4A') situées sur des côtés opposés du convoyeur de segments (7),

5. Appareil de transport selon la revendication 3 ou 4, **caractérisé en ce qu'**il comprend en outre une unité de rotation (50) adaptée pour faire tourner le segment de transport (30, 30') du convoyeur de segments (7, 7') autour de l'axe longitudinal (U) du segment de transport (30, 30') reliant les articulations (31) du segment de transport (30, 30').

6. Appareil de transport selon la revendication 5, **caractérisé en ce que** l'unité de rotation (50) est munie de trois blocs (51, 52), tandis qu'au moins un bloc (51, 52) est un bloc rotatif.

7. Appareil d'emballage adapté pour insérer des groupes d'articles en forme de tige tout en maintenant une orientation mutuelle dans le groupe (G) d'articles en forme de tige (3) dans des paquets, **caractérisé en ce qu'**il comprend
l'appareil de transport selon les revendications 3 à 6, et
l'unité de transfert (63) adaptée pour transférer les groupes (G) d'articles en forme de tige (3) du convoyeur de segments (7, 7') dans le paquet tout en maintenant l'orientation mutuelle dans le groupe (G) d'articles en forme de tige (3).
